# EUROPÄISCHE PATENTSCHRIFT

(11) **EP 0 622 014 B1**
(45) Veröffentlichungstag und Bekanntmachung des Hinweises auf die Patenterteilung: **01.07.1998**
(21) Anmeldenummer: 94106029.5
(22) Anmeldetag: 19.04.1994
(51) Int. Cl.: A01F 7/06

(54) **Guterfassungselement einer Axialabscheidevorrichtung**
Crop engaging element for axial flow separator
Elément attaquant la récolte pour séparateur à écoulement axial

(30) Priorität: 26.04.1993 US 53054
(43) Veröffentlichungstag der Anmeldung: 02.11.1994
(73) Patentinhaber: DEERE & COMPANY, Moline, Illinois 61265 (US)
(72) Erfinder: Harden, Philip A., Colona, Illinois 61241 (US); Stickler, Mark Fredrick, Silvis, Illinois 61282 (US)
(74) Vertreter: Feldmann, Bernhard

(56) Entgegenhaltungen:
- EP-A- 0 057 380
- EP-A- 0 419 786
- DE-A- 1 919 399
- DE-C- 2 233 019
- FR-A- 2 615 350
- GB-A- 2 015 855
- US-A- 4 889 517

## Beschreibung

Die Erfindung betrifft ein Guterfassungselement einer Axialabscheidevorrichtung bzw. eine Axialabscheidevorrichtung mit einem Rotor und auf dessen Umfangsfläche aufgesetzten Guterfassungselementen.

In der DE-C2-22 33 019 ist ein Mähdrescher beschrieben, der zwei sich in Längsrichtung erstreckende Dresch- und Trenneinheiten in Axialflußbauart enthält. Jede Dresch- und Trenneinheit weist einen Rotor auf, auf dessen Außenumfangsfläche nach einem Ausführungsbeispiel Stege und auf deren Außenseite aufgesetzte Mitnehmer vorgesehen sind. Die Mitnehmer weisen einen Fußteil auf, der mit den Stegen verschraubt werden kann und an den sich ein Leit- und Mitnahmeblech unter einem rechten Winkel anschließt. Während die Mitnehmer gleich ausgebildet sind, erstrecken sie sich doch unter unterschiedlichen Winkeln zu der Längsachse des Rotors, um den unterschiedlichen Aufgaben des Rotors in den jeweiligen Teilbereichen Rechnung zu tragen.

Aus der GB-A-2 015 855 geht eine Axialdresch- und trennvorrichtung mit einem Rotor hervor, auf dessen Umfangsfläche in axial verlaufenden Reihen Platten befestigt sind, die in Bezug auf die Umfangsfläche geneigt verlaufen. Die Neigung der Platten in Bezug auf die Längsachse und die Drehrichtung des Rotors sind so gewählt, daß das mitzunehmende Gut in einer Kammer zwischen den Platten und der Umfangsfläche gefangen wird und somit während der Drehbewegung in einer Art Kehlrinne entlang gleitet.

Dieser Rotor ist insofern nachteilig, als die Neigung der Platten in Verbindung mit der Drehrichtung das Fördergut in enger Anlage an dem Rotor hält und somit kein optimales Abscheideergebnis zuläßt.

Die der Erfindung zugrunde liegende Aufgabe wird darin gesehen, eine Axialabscheidevorrichtung bzw. Guterfassungselemente für diese mit einer hohen Abscheidewirkung vorzuschlagen.

Diese Aufgabe wird erfindungsgemäß durch die Lehre des Patentanspruchs 1 bzw. 4 gelöst, wobei in den weiteren Patentansprüchen die Lösung in vorteilhafter Weise weiterentwickelnde Merkmale aufgeführt sind.

Auf diese Weise, d. h. bei Verwendung von Guterfassungselementen mit einer geneigt verlaufenden Gutangriffsplatte, die also zu der voreilenden Außenfläche des Rotors bei dessen Drehung einen stumpfen und zu dessen nacheilender Fläche einen spitzen Winkel einschließt, erhält die Bewegung des Guts eine radiale Komponente, die dazu führt, daß das Erntegut zu den Abscheideelementen radial nach außen gedrängt wird und sich dort trennt. Bei einem bekannten Guterfassungselement, dessen Flächen rechtwinklig aufeinander stehen, wird das Gut nur mitgenommen, aber nicht nach außen geführt, so daß die Abscheidewirkung geringer ist. Die Vorkehrung einer Lippe anderer Neigung, die rechtwinklig zu der Befestigungsplatte verläuft, sichert die Mitnahmebewegung des Guts durch den Rotor auch dann, wenn das Gut nach außen gedrängt worden ist.

Wird die Vorlaufkante des Guterfassungselements und dort insbesondere deren Gutangriffsplatte schräg anlaufend ausgeführt, kann sich das Gut nicht festsetzen und verstopfen; vielmehr wird es über die Schräge gleiten und sich in der Axialrichtung des Rotors bewegen, was dem Gutfluß förderlich ist.

Wenn mehrere Befestigungsbohrungen und/oder -schlitze vorgesehen werden, und zwar insbesondere mehr als Befestigungslöcher auf dem Rotor zur Verfügung stehen, dann können durch verschiedene Kombinationen unterschiedliche Stellungen des Guterfassungselements auf dem Rotor erreicht werden, was ebenfalls zu einer guten Abscheidewirkung beitragen kann.

Eine Axialabscheidevorrichtung kann mit erfindungsgemäßen Guterfassungselementen eine hohe Abscheidewirkung bei gutem Gutstromfluß erbringen. Die Guterfassungselemente lassen sich auf einfachste Weise auf dem Rotor befestigen, wenn dieser auf seinem Außenumfang, z. B auf der Mantelfläche einer Trommel, Hohlträger mit Befestigungslöchern trägt, in die in bekannter Weise Schrauben einsetzbar sind.

Die Aggressivität im Dresch- und Abscheideverhalten des Rotors kann durch die Ausrichtung der Längsachse der Guterfassungselemente in bezug auf die Drehachse des Rotors geändert und den jeweiligen Erntegütern und -verhältnissen angepaßt werden. Insbesondere eine Neigung von 20° im Dreschbereich, von 10° im Abscheidebereich und 0° im Abgabebereich des Rotors gewährleisten gute Dreschergebnisse.

In der Zeichnung ist ein nachfolgend näher beschriebenes Ausführungsbeispiel der Erfindung dargestellt. Es zeigt:
- Fig. 1: einen Mähdrescher in schematischer Darstellung und in Seitenansicht mit einem Rotor,
- Fig. 2: die abgewickelte Mantelfläche des Rotors mit erfindungsgemäßen Guterfassungselementen,

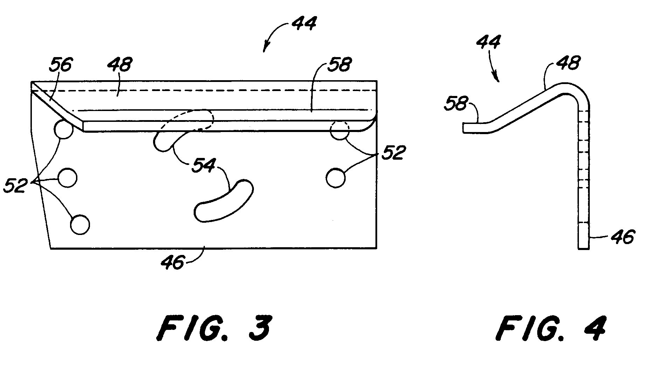

- Fig. 3: ein Guterfassungselement in Draufsicht und
- Fig. 4: das Guterfassungselement in Vorderansicht.

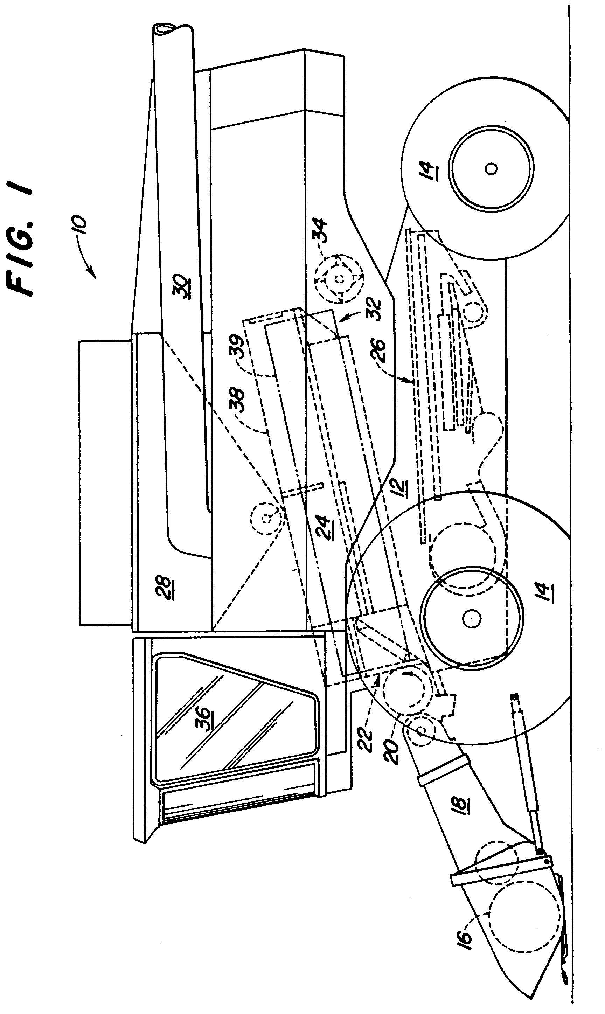

Figur 1 zeigt einen Mähdrescher 10 mit einem Fahrgestell 12, das sich über von ihm abstehende Laufräder 14 auf dem Boden abstützt und über ein Feld bewegt wird. Eine Erntebergungsvorrichtung 16 befindet sich an der Mähdreschervorderseite und dient dazu, Erntegut vom Boden aufzunehmen und es über einen Schrägförderer 18 einer Trommel 20 zuzuführen. Die Trommel 20 überführt das Erntegut über einen Zufuhrbereich 22 nach oben zu einer Axialabscheidevorrichtung 24.

Die Axialabscheidevorrichtung 24 drischt das Erntegut und trennt es in verschiedene Bestandteile. Das Korngut - Getreide - und die Spreu fallen durch einen Rost an der Unterseite der Axialabscheidevorrichtung 24 einem Reinigungssystem 26 zu. Das Reinigungssystem 26 entfernt die Spreu und gibt das gereinigte Korngut einem nicht gezeigten Körnerelevator auf. Der Körnerelevator liefert das Korngut in einen Korntank 28, aus dem es mittels eines Entleerrohrs 30 in einen Anhänger oder dergleichen entladen werden kann.

Gedroschenes und abgeschiedenes Stroh wird aus der Axialabscheidevorrichtung 24 durch einen Auslaß 32 zu einer Trommel 34 geführt. Die Trommel 34 selbst schleudert das Stroh aus dem rückwärtigen Ende des Mähdreschers 10. Die Bedienung des Mähdreschers 10 erfolgt von einer Fahrerkabine 36 aus.

Die Axialabscheidevorrichtung 24 enthält ein zylindrisches Rotorgehäuse 38 und einen innerhalb von diesem drehbar angeordneten Rotor 39. Der Rotor 39 enthält eine hohle zylindrische Trommel mit zwölf erhobenen und sich längs erstrekkenden Hohlträgern 40, die auf deren Außenumfangsfläche aufgeschweißt sind. Die Hohlträger 40, die z. B. einen U-förmigen Querschnitt aufweisen können, dessen Schenkel auf der Trommel aufsitzen, sind mit einer Vielzahl von Befestigungslöchern 42 versehen, über die Guterfassungselemente 44 befestigt werden.

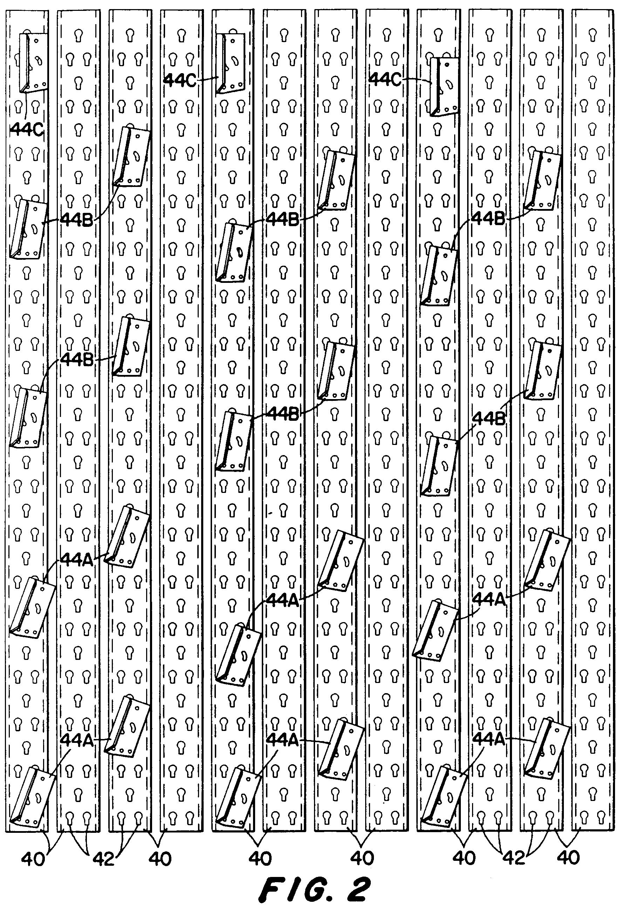

In dem in Figur 2 dargestellten Ausführungsbeispiel sind die im unteren Bereich angeordneten Guterfassungselemente 44a mit ihrer Längsachse unter einem Winkel von ca. 20° zu der Drehachse des Rotors 39 auf diesen aufgesetzt. Diese Guterfassungselemente 44a befinden sich in dem Dreschbereich der Axialabscheidevorrichtung 24. Die nächste und daran anschließende Gruppe von Guterfassungselementen 44b ist unter einem Winkel von 10° zu der Drehachse ausgerichtet und befindet sich in dem Abscheidebereich der Axialabscheidevorrichtung 24. Die letzte Gruppe von Guterfassungselementen 44c verläuft unter einem Winkel von 0° zu der Drehachse und befindet sich in dem Abgabebereich der Axialabscheidevorrichtung 24. Obwohl die Guterfassungselemente mit 44a, 44b und 44c bezeichnet sind, sind sie außer ihrer Anordnung auf dem Rotor 39 identisch. Die dargestellten Guterfassungselemente 44 sind entsprechend einer Drehung des Rotors 39 entgegen dem Uhrzeigerdrehsinn ausgerichtet, wenn man die Stellung eines vor dem Mähdrescher 10 stehenden und zu dessen Rückseite schauenden Betrachters einnimmt.

Es wird darauf hingewiesen, daß bei unterschiedlichen zu dreschenden Gutarten und Gutbedingungen andere als die in Figur 2 gezeigten und vorbeschriebenen Winkel gewählt werden können, um zu einem optimalen Dresch- und Abscheideergebnis zu gelangen.

Jedes Guterfassungselement 44 wird mehr oder weniger von einem geformten Blech gebildet, das sich aus einer Befestigungsplatte 46 und einer schräg verlaufenden Gutangriffsplatte 48 zusammensetzt. Die Befestigungsplatte 46 wird dazu benutzt, das Guterfassungselement 44 auf dem sich längs erstreckenden Hohlträger 40 des Rotors 39 zu befestigen. Die Befestigungsplatte 46 ist mit fünf Befestigungsbohrungen 52 und zwei nahezu halbkreisförmigen Befestigungsschlitzen 54 versehen. Die Befestigungsbohrungen 52 sind derart angeordnet, daß wenigstens drei von ihnen mit den Befestigungslöchern 42 in den Hohlträgern 40 fluchten, wenn die Guterfassungselemente 44 einen Winkel von 10° oder 20° zu der Drehachse einnehmen. Zwei Befestigungsbohrungen 52 fluchten mit den Befestigungslöchern 42 in den Hohlträgern 40, wenn die Guterfassungselemente 44 unter einem Winkel von 0° zu der Drehachse verlaufen. Die Befestigungsschlitze 54 sind für extreme Befestigungsbedingungen vorgesehen, in denen die Befestigungslöcher und -bohrungen 42 und 52 nicht ausreichen. Zur Befestigung der Guterfassungselemente 44 auf den Hohlträgern 40 werden entsprechende nicht gezeigte Schrauben verwendet.

Die geneigt verlaufende Gutangriffsplatte 48 erstreckt sich von der Befestigungsplatte 46 aus nach oben, d. h. nach der Befestigung auf dem Rotor 39 radial nach außen, unter einem spitzen Winkel. Die Gutangriffsplatte 48 ist mit einer geneigt ansteigenden Vorlaufkante 56 und einem sich radial erstreckenden Rand 58 versehen. Der radial verlaufende Rand 58 steht unter einem rechten Winkel zu der Befestigungsplatte 46 und dient dazu, das Gut von dem Rotor 39 radial nach außen zu bewegen, so daß es in Eingriff mit den schraubenlinienförmigen Gleitkufen und dem Abscheiderost in dem Rotorgehäuse 38 kommt.

## Patentansprüche

1. Guterfassungselement (44) einer Axialabscheidevorrichtung (24) mit einer Befestigungsplatte (46), von der sich eine Gutangriffsplatte (48) erstreckt, dadurch gekennzeichnet, daß die Gutangriffsplatte (48) unter einem spitzen Winkel zu der Befestigungsplatte (46) verläuft und daß sich an der der Befestigungsplatte (46) abgelegenen Seite der Gutangriffsplatte (48) an diese ein Rand (58) anschließt, der unter einem rechten Winkel zu der Befestigungsplatte (46) verläuft.

2. Guterfassungselement nach Anspruch 1, dadurch gekennzeichnet, daß eine geneigt verlaufende Vorlaufkante (56) an der Gutangriffsplatte (48) vorgesehen ist.

3. Guterfassungselement nach einem oder mehreren der vorherigen Ansprüche, dadurch gekennzeichnet, daß in der Befestigungsplatte (46) mehrere Befestigungsbohrungen (52) und/oder Befestigungsschlitze (54) vorgesehen sind.

4. Axialabscheidevorrichtung mit einem in einem Rotorgehäuse (38) drehbar gelagerten Rotor (39), auf dessen äußerer Umfangsfläche Guterfassungselemente (44), insbesondere nach einem oder mehreren der vorherigen Ansprüche 1 bis 3, mittels einer Befestigungsplatte (46) angeordnet sind, von der sich jeweils eine Gutangriffsplatte (48) nach außen erstreckt, dadurch gekennzeichnet, daß die Gutangriffsplatte (48) unter einem spitzen Winkel zu der Befestigungsplatte (46) verläuft und daß sich an der der Befestigungsplatte (46) abgelegenen Seite der Gutangriffsplatte (48) an diese ein Rand (58) anschließt, der unter einem rechten Winkel zu der Befestigungsplatte (46) verläuft.

5. Axialabscheidevorrichtung nach Anspruch 4, dadurch gekennzeichnet, daß in der Umfangsfläche des Rotors (39) oder in auf diesen aufgesetzten Hohlträgern (40) Befestigungslöcher (42) vorgesehen sind.

6. Axialabscheidevorrichtung nach einem oder mehreren der vorherigen Ansprüche 4 und 5, dadurch gekennzeichnet, daß mittels Befestigungslöchern und -bohrungen (42, 52) in den Guterfassungselementen (44) bzw. dem Rotor (39) oder den Hohlträgern (40) die Guterfassungselemente (44) in verschiedenen Stellungen gegenüber der Drehachse des Rotors (39) festsetzbar sind.

7. Axialabscheidevorrichtung nach einem oder mehreren der vorherigen Ansprüche 4 bis 6, dadurch gekennzeichnet, daß in einem Dreschbereich die Guterfassungselemente (44a) unter einem Winkel von 20° und/oder in einem Abscheidebereich die Guterfassungselemente (44b) unter einem Winkel von 10° und/oder in einem Abgabebereich die Guterfassungselemente (44c) unter einem Winkel von 0° zu der Drehachse des Rotors (39) auf diesem angeordnet sind.

## Claims

1. A crop engaging element (44) of an axial flow separator (24), with a mounting plate (46), from which extends a crop engaging plate (48), characterized in that the crop engaging plate (48) runs at an acute angle to the mounting plate (46) and in that a lip (58) adjoins the side of the crop engaging plate (48) remote from the mounting plate (46) and runs at a right angle to the mounting plate (46).

2. A crop engaging element according to claim 1, characterized in that an inclined leading edge (56) is provided on the crop engaging plate (48).

3. A crop engaging element according to one or more of the preceding claims, characterized in that a plurality of mounting bores (52) and/or mounting slots (54) are provided in the mounting plate (46).

4. An axial flow separator with a rotor (39) rotatably mounted in a rotor housing (38) and on whose outer peripheral surface crop engaging elements (44), especially according to one or more of the preceding claims 1 to 3, are arranged each by means of a mounting plate (46), from each of which a crop engaging plate (48) extends outwardly, characterized in that the crop engaging plate (48) runs at an acute angle to the mounting plate (46) and in that a lip (58) adjoins the side of the crop engaging plate (48) remote from the mounting plate (46) and runs at a right angle to the mounting plate (46).

5. An axial flow separator according to claim 4, characterized in that mounting holes (42) are provided in the peripheral surface of the rotor (39) or in hollow bearers (40) fitted thereon.

6. An axial flow separator according to one or more of the preceding claims 4 and 5, characterized in that the crop engaging elements (44) can be fixed in various attitudes relative to the axis of rotation of the rotor (39) by means of mounting holes and bores (42, 52) in the crop engaging elements (44) and the rotor (39) or the hollow bearers (40).

7. An axial flow separator according to one or more of the preceding claims 4 to 6, characterized in that the crop engaging elements (44a) are arranged on the rotor in a threshing region at an angle of 20° and/or the crop engaging elements (44b) are arranged on the rotor in a separator region at an angle of 10° and/or the crop engaging elements (44c) are arranged on the rotor in a discharge region at an angle of 0° to the axis or rotation of the rotor (39).

## Revendications

1. Organe (44) de saisie de la matière à récolter, dans un séparateur axial (24) comportant une plaque de fixation (46), à partir de laquelle s'étend une plaque (48) d'accrochage de la matière à récolter, caractérisé en ce que la plaque (48) d'accrochage de la matière à récolter fait un angle aigu par rapport à la plaque de fixation (46) et qu'un bord (58), qui fait un angle droit par rapport à la plaque de fixation (46), se raccorde à la plaque (48) d'accrochage de la matière à récolter, sur le côté de cette plaque tourné à l'opposé de la plaque de fixation (46).

2. Organe de saisie de la matière à récolter selon la revendication 1, caractérisé en ce qu'un bord avant incliné (56) est prévu sur la plaque (48) d'accrochage de la matière à récolter.

3. Organe de saisie de la matière à récolter selon une ou plusieurs des revendications précédentes, caractérisé en ce que dans la plaque de fixation (46) sont prévus plusieurs perçages de fixation (52) et/ou fentes de fixation (54).

4. Séparateur axial comportant un rotor (39), qui est monté de manière à pouvoir tourner dans un carter (38) du rotor et sur la surface circonférentielle extérieure duquel des organes (44) de saisie de la matière à récolter, notamment selon une ou plusieurs des revendications précédentes 1 à 3, sont montés au moyen d'une plaque de fixation (46), à partir de laquelle s'étend respectivement, vers l'extérieur, une plaque (48) d'accrochage de la matière à récolter, caractérisé en ce que la plaque (48) d'accrochage de la matière à récolter qui fait un angle aigu par rapport à la plaque de fixation (46) et qu'un bord (58), qui fait un angle droit par rapport à la plaque de fixation (46), se raccorde à la plaque (48) d'accrochage de la matière à récolter, sur le côté de cette plaque tourné à l'opposé de la plaque de fixation (46).

5. Séparateur axial selon la revendication 4, caractérisé en ce que des trous de fixation (42) sont prévus dans la surface circonférentielle du rotor (39) ou dans des supports creux (40) montés sur ce rotor.

6. Séparateur axial selon les revendications 4 et 5, caractérisé en ce que des organes (44) de saisie de la matière à récolter peuvent être fixés dans des différentes positions par rapport à l'axe de rotation du rotor (39), à l'aide de trous et de perçages de fixation (42, 52) formés dans les organes (44) de saisie de la matière à récolter ou dans le rotor (39) ou dans les supports creux (40).

7. Séparateur axial selon les revendications 4 à 6, caractérisé en ce que les organes (44a) de saisie de la matière à récolter sont disposés sur le rotor (39) en faisant un angle de 20° par rapport à l'axe de rotation du ROTOR, dans une zone de battage, et/ou que les organes (44b) de saisie de la matière à récolter sont disposés sur le rotor en faisant un angle de 10° par rapport à cet axe, dans une zone de séparation et/ou que les organes (44c) de détection de la matière à récolter sont disposés sur le rotor de manière à faire un angle de 0° par rapport à cet axe, dans une zone de délivrance de la matière.
